# EUROPEAN PATENT SPECIFICATION

(11) **EP 3 813 404 B1**
(45) Date of publication and mention of the grant of the patent: **09.07.2025**
(21) Application number: 19821825.7
(22) Date of filing: 28.05.2019
(51) Int. Cl.: H04W 56/00, H04W 72/0453, H04L 5/00, H04W 72/51

(54) **RESOURCE INDICATION METHOD, DEVICE AND SYSTEM**
RESSOURCENANZEIGEVERFAHREN, -VORRICHTUNG UND -SYSTEM
PROCÉDÉ, DISPOSITIF, ET SYSTÈME D'INDICATION DE RESSOURCE

(30) Priority: 19.06.2018 CN 201810632461
(43) Date of publication of application: 28.04.2021
(73) Proprietor: Vivo Mobile Communication Co., Ltd., Dongguan, Guangdong 523860 (CN)
(72) Inventor: WU, Yumin, Dongguan, Guangdong 523860 (CN)
(74) Representative: Conti, Marco
(86) International application number: PCT/CN2019/088877
(87) International publication number: WO 2019/242464

(56) References cited:
- WO-A1-2016/124159
- US-A1- 2018 007 731
- CATT: "UE capability temporary restrictions", vol. RAN WG2, no. Qingdao, China; 20170627 - 20170629, 26 June 2017 (2017-06-26), XP051300902, Retrieved from the Internet <URL:http://www.3gpp.org/ftp/Meetings_3GPP_SYNC/RAN2/Docs/> [retrieved on 20170626]
- "3rd Generation Partnership Project; Technical Specification Group Radio Access Network; Evolved Universal Terrestrial Radio Access (E-UTRA); Radio Resource Control (RRC); Protocol specification (Release 15)", 18 May 2018 (2018-05-18), XP051566186, Retrieved from the Internet <URL:http://www.3gpp.org/ftp/Email%5FDiscussions/RAN2/[RAN2%23101bis]/[101bis%2348][NR]%20UE%20capabilites%20structure> [retrieved on 20180518]
- QUALCOMM INCORPORATED: "RRM requirement under IDC interference from LAA WiFi Hardware Sharing", vol. RAN WG4, no. Busan, South Korea; 20180521 - 20180525, 14 May 2018 (2018-05-14), XP051578085, Retrieved from the Internet <URL:http://www.3gpp.org/ftp/tsg%5Fran/WG4%5FRadio/TSGR4%5F87/Docs/R4%2D1807933%2Ezip> [retrieved on 20180514]
- "3rd Generation Partnership Project; Technical Specification Group Radio Access Network; Evolved Universal Terrestrial Radio Access (E-UTRA); User Equipment (UE) radio access capabilities (Release 15)", 3GPP STANDARD; TECHNICAL SPECIFICATION; 3GPP TS 36.306, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 3 April 2018 (2018-04-03), pages 1 - 86, XP051450929
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 15)", 3GPP STANDARD; TECHNICAL SPECIFICATION; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 3 April 2018 (2018-04-03), pages 1 - 341, XP051450927
- ERICSSON: "Measurement Requirements for LAA/WiFi Hardware Sharing Problem", 3GPP TSG-RAN WG2 #101 R2-1803836, vol. RAN WG2, 2 March 2017 (2017-03-02), XP051400852
- VIVO: "TP of 36.331 on the IDC report of NR frequency in EN-DC", 3GPP TSG-RAN WG2 MEETING #102 R2-1807635, vol. RAN WG2, 2018052 - 25 May 2018 (2018-05-25), XP051443992
- CATT: "UE capability temporary restrictions", 3GPP TSG-RAN WG2 #99 R2-1707891, vol. RAN WG2, 20 August 2017 (2017-08-20) - 25 August 2017 (2017-08-25), XP051317826
- ERICSSON: "Analysis of measurement requirements under sharing of hardware between LAA and WiFi", 3GPP TSG RAN WG4 MEETING #86BIS R4-1805029, vol. RAN WG4, 15 April 2018 (2018-04-15) - 20 April 2018 (2018-04-20), XP051431827

## Description

### TECHNICAL FIELD

Embodiments of the present invention relate to the field of communications technologies, and in particular, to resource indication methods, and corresponding user equipment, base station communications system and computer-readable storage medium.

### BACKGROUND

In the field of communications, when user equipment (User Equipment, UE) operates on a frequency channel of a long term evolution (Long Term Evolution, LTE) network, in one case, a transceiver function module of the UE may share the frequency channel with another function module (for example, a wireless fidelity (Wireless Fidelity, WiFi) module) of the UE (hereinafter referred to as hardware sharing). In another case, a first radio signal transmitted by the UE may be interfered with by a second radio signal sent by other UE or base stations. In other words, the first radio signal and the second radio signal share the frequency channel (hereinafter referred to as sharing caused by radio signal interference).

At present, when the UE operates on a plurality of frequency channels, a sharing phenomenon (including the hardware sharing and sharing caused by radio signal interference) may be present among some frequency channels (hereinafter referred to as first frequency channels) in the plurality of frequency channels. The hardware sharing may affect a working state of the UE. When there is a sharing phenomenon on the first frequency channels, the UE may report sharing indication information (including the first frequency channels) to the base station, so that the base station deletes the first frequency channels according to the sharing indication information.
"UE capability temporary restrictions" (CATT, 3GPP TSG-RAN WG2 Meeting #NR AH2, R2-1706391) discusses the UE capability temporary restrictions. Analysis of a solution based on assistance information for parameter re-configuration is given. In order to resolve issue 1 (Hardware sharing between NR and other things) and issue 2 (Interference between NR and other things), UE should indicate to the gNB the information of the affected frequencies. Multiple frequencies may need to be reported to the gNB at the same time, and each of them need to be restricted or resumed the capability respectively. A bitmap is included in the message to indicate each frequency whether need to be restricted or resumed the capability.
"3GPP TS 36.331" (V15.1.0) discloses in-device coexistence indication. Specifically, actions related to transmission of InDeviceCoexIndication message are disclosed.

3GPP TS 36.300 , V15.1.0 discloses IDC (In-Device Coexistence) problems notification through an IDC indication from the UE. To assist the eNB in selecting an appropriate solution, all necessary/available assistance information for both FDM and TDM solutions is sent together in the IDC indication to the eNB. The IDC assistance information contains the list of E-UTRA carriers suffering from IDC problems, the direction of the interference and, depending on the scenario (see TR 36.816 [50]), it also contains TDM patterns or parameters to enable appropriate DRX configuration for TDM solutions on the serving E-UTRA carrier. Furthermore, the IDC indication can also be configured to indicate that the cause of IDC problems is hardware sharing between LAA and WLAN operation, in which case the UE may omit the TDM assistance information.

However, the sharing indication information reported by the UE to the base station can only indicate frequency channels with a sharing phenomenon (that is, the first frequency channels), and the sharing phenomenon on the first frequency channels may be hardware sharing or sharing caused by radio signal interference. Therefore, the base station cannot accurately determine, based on the sharing indication information reported by the UE, the sharing phenomenon on which frequency channel of the first frequency channels is hardware sharing, and the sharing phenomenon on which frequency channel is sharing caused by radio signal interference. As a result, the base station deletes all frequency channels (that is, the first frequency channels) reported by the UE, causing reduction of operating frequency channels of the UE or reduction of available resources of the UE.

### SUMMARY

Embodiments of the present invention invention, as defined in the appended claims, provide resource indication methods, as defined in claims 1 and 5, a user equipment as defined in claim 10, a base station as defined in claim 12, a communications system as defined in claim 14 and a computer-readable storage medium as defined in claim 15, to resolve a problem that operating frequency channels of UE, namely, available resources of the UE, are reduced because a base station deletes all frequency channels reported by the UE.

In the embodiments of the present invention, the UE may send the hardware sharing assistance information to the base station (the hardware sharing assistance information is used to indicate the target resource, and the target resource is a resource with a hardware sharing phenomenon in the resources used by the UE), so that the base station can process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

### BRIEF DESCRIPTION OF DRAWINGS

FIG. 1 is a schematic architectural diagram of a communications system according to an embodiment of the present invention;
FIG. 2 is a schematic diagram 1 of a resource indication method according to an embodiment of the present invention;
FIG. 3 is a schematic diagram 2 of a resource indication method according to an embodiment of the present invention;
FIG. 4 is a schematic diagram 3 of a resource indication method according to an embodiment of the present invention;
FIG. 5 is a schematic diagram 4 of a resource indication method according to an embodiment of the present invention;
FIG. 6 is a schematic diagram 5 of a resource indication method according to an embodiment of the present invention;
FIG. 7 is a schematic structural diagram 1 of UE according to an embodiment of the present invention;
FIG. 8 is a schematic structural diagram 2 of UE according to an embodiment of the present invention;
FIG. 9 is a schematic structural diagram of a base station according to an embodiment of the present invention;
FIG. 10 is a schematic diagram of hardware of UE according to an embodiment of the present invention; and
FIG. 11 is a schematic diagram of hardware of a base station according to an embodiment of the present invention.

### DESCRIPTION OF EMBODIMENTS

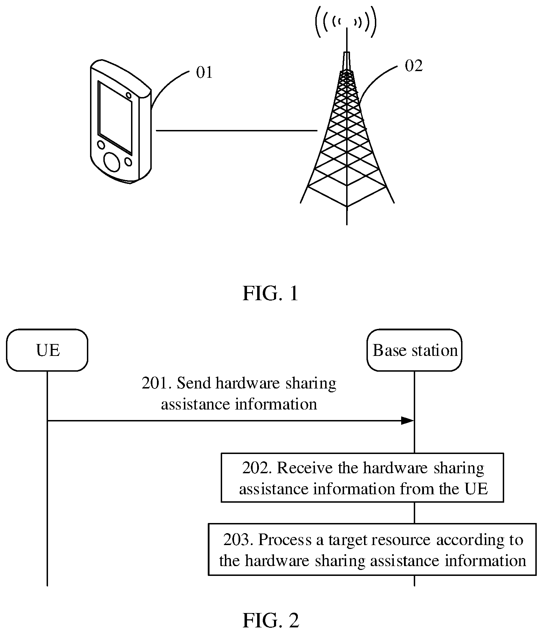

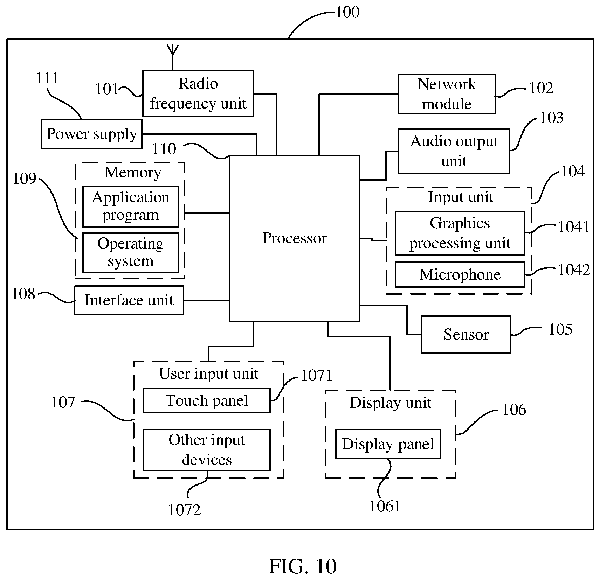

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention. In the following, the embodiments referring to FIGS. 1-9 are according to the claimed invention, whereas the embodiments referring to FIGS. 10-11 are not according to the invention and are present for illustration purpose only.

In the specification of the embodiments and the claims of the present invention, the terms "first", "second", and so on are intended to distinguish between different objects rather than indicate a particular order of the objects. For example, a first radio signal, a second radio signal, and the like are used to distinguish different radio signals, rather than describe a specific sequence of radio signals. In the descriptions of the embodiments of the present invention, "a plurality" means at least two, unless otherwise specified.

The term "and/or" in the specification describes an association relationship for describing associated objects and represents that three relationships may exist. For example, A and/or B may represent the following three cases: only A exists, both A and B, and only B. The symbol "/" herein indicates an "or" relationship of associated objects. For example, A/B means A or B.

In the embodiments of the present invention, the word such as "exemplary" or "for example" is used to represent giving an example, an instance, or an illustration. Any embodiment or design scheme described as "exemplary" or "for example" in the embodiments of the present invention should not be construed as being more preferred or advantageous than other embodiments or design schemes. To be exact, use of the word "exemplary" or "for example" or the like is intended to present a related concept in a specific manner.

Some concepts and/or terms used in the resource indication method, the apparatus, and the system that are provided in the embodiments of the present invention are explained below.

Hardware sharing: A first function module and a second function module of UE share one resource (for example, a frequency channel).

Band combination (Band Combination): In carrier aggregation, UE may use at least two frequency bands (for example, a band combination) to transmit data.

Bandwidth part (BWP): A cell served by a base station supports relatively large bandwidth (hereinafter referred to as large bandwidth), but UE may work on a plurality of relatively small bandwidth parts (hereinafter referred to as small bandwidth parts). The small bandwidth part, on which the UE may work, of the large bandwidth is referred to as a BWP.

Supplementary uplink carrier (Supplement Uplink carrier, SUL carrier): In a fifth-generation mobile communications (5G) system, two uplink carriers may be configured for one cell, one of which is a supplementary uplink carrier. When a network side controls UE to send data on a carrier, the network side may indicate an identifier of the carrier to the UE (for example, through SUL carrier indication or normal uplink (Normal Uplink, NUL) carrier indication).

Dual connectivity (Dual Connectivity, DC): UE may be configured with two operating cell groups, namely a master cell group (Master Cell Group, MCG) and a secondary cell group (Secondary Cell Group, SCG).

The embodiments of the present invention provide a resource indication method, an apparatus, and a system. UE may send hardware sharing assistance information to a base station (the hardware sharing assistance information is used to indicate a target resource, and the target resource is a resource with a hardware sharing phenomenon in resources used by the UE), so that the base station can process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

The resource indication method, the apparatus, and the system that are provided by the embodiments of the present invention may be applied to a communications system. They may be specifically applied to a process in which a base station of the communications system processes, according to hardware sharing assistance information sent by UE, a resource with a hardware sharing phenomenon in resources used by the UE.

For example, FIG. 1 is a schematic architectural diagram of a communications system according to an embodiment of the present invention. As shown in FIG. 1, the communications system includes UE 01 and a base station 02. A connection may be established between the UE 01 and the base station 02.

It should be noted that in this embodiment of the present invention, the connection between the UE 01 and the base station 02 shown in FIG. 1 may be wireless. For clearer illustration, a connection relationship between the UE 01 and the base station 02 is denoted by a solid line in FIG. 1.

The UE may be a device that provides a user with voice and/or data connectivity, a handheld device with a wired/wireless connection function, or another processing device connected to a wireless modem. The UE can communicate with one or more core network devices through a radio access network (Radio Access Network, RAN). The UE may be a mobile terminal, such as a mobile phone (or referred to as a "cellular" phone) and a computer with a mobile terminal, or may be a portable, pocket-sized, handheld, computer built-in or vehicle-mounted mobile apparatus, which exchanges voice and/or data with the RAN. For example, the UE is a device such as a personal communication service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA). The UE may also be referred to as a user agent (User Agent), a terminal device, or the like.

The base station is an apparatus deployed in a RAN and configured to provide a wireless communication function for the UE. The base station may include various forms of macro base stations, micro base stations, relay nodes, access points, and the like. In systems using different radio access technologies, a device with a base station function may have different names. For example, in a third-generation mobile communication (3G) network, it is referred to as a NodeB (Node B); in an LTE system, it is referred to as an evolved NodeB (evolved NodeB, eNB or eNodeB); in a 5G network, it is referred to as a gNB, and so on. With evolution of communications technologies, the terminology for "base station" may change.

The following details the resource indication method, the apparatus, and the system that are provided in the embodiments of the present invention through specific embodiments and application scenarios thereof with reference to the accompanying drawings.

At present, in the prior art, sharing indication information reported by UE to a base station can only indicate frequency channels with a sharing phenomenon, and the sharing phenomenon of these frequency channels with a sharing phenomenon may be hardware sharing or sharing caused by radio signal interference. Therefore, the base station cannot accurately determine, based on the sharing indication information reported by the UE, the sharing phenomenon on which frequency channel of the first frequency channels is hardware sharing, and the sharing phenomenon on which frequency channel is sharing caused by radio signal interference. As a result, the base station deletes all frequency channels with a sharing phenomenon reported by the UE, causing reduction of operating frequency channels of the UE or reduction of available resources of the UE.

To resolve the foregoing technical problem, an embodiment of the present invention provides a resource indication method. Interaction between UE and a base station is used as an example to describe the resource indication method provided in this embodiment of the present invention.

Based on the communications system in FIG. 1, an embodiment of the present invention provides a resource indication method. As shown in FIG. 2, the resource indication method may include the following steps 201 to 203.

Step 201: UE sends hardware sharing assistance information to a base station.

In this embodiment of the present invention, the hardware sharing assistance information is used to indicate a target resource, the target resource is a resource with a hardware sharing phenomenon in resources used by the UE, and the hardware sharing assistance information is used by the base station to process the target resource.

It should be noted that in this embodiment of the present invention, the resource with a hardware sharing phenomenon may be understood as a resource shared by a first function module and a second function module of the UE.

In the claimed invention, the hardware sharing assistance information includes at least one of the following: a BWP identifier, a cell identifier, a cell group identifier, and identification of a beam.

In the claimed invention, the target resource includes at least one of the following: a target BWP, a target cell, a target cell group, and a target beam. In an embodiment, the hardware sharing assistance information further includes al least one of the following: a frequency channel identifier, a frequency band identifier, a frequency band combination identifier, a bandwidth identifier and a radio access technology identifier and the target resource further includes at least one of the following: a target frequency channel, a target frequency band, a target frequency band combination, a target bandwidth and a target radio access technology.

It can be understood that in this embodiment of the present invention, the frequency channel identifier may be used to indicate the target frequency channel, the frequency band identifier may be used to indicate the target frequency band, the frequency band combination identifier may be used to indicate the target frequency band combination, the bandwidth identifier may be used to indicate the target bandwidth, the BWP identifier may be used to indicate the target BWP, the cell identifier may be used to indicate the target cell, the cell group identifier may be used to indicate the target cell group, the radio access technology identifier may be used to indicate the target radio access technology, and the identification of a beam may be used to indicate the target beam.

It can be understood that in this embodiment of the present invention, the target cell may refer to a cell serving the UE.

For example, in DC, the target cell group serving the UE may be an MCG and an SCG.

For example, the target radio access technology may include an LTE radio access technology and/or a 5G radio access technology. The 5G radio access technology may be a new radio access technology (New RAT, NR).

Optionally, in this embodiment of the present invention, the identification of a beam may include at least one of the following: a beam identifier, a beam pair identifier, a synchronization signal block (Synchronisation Signal Block, SSB) identifier, a channel state information reference signal (Channel State Information-Reference Signal, CSI-RS) identifier, a quasi co-location (Quasi Co-Located, QCL) identifier, and a sounding reference signal (Sounding Reference Signal, SRS) identifier.

It can be understood that in this embodiment of the present invention, the beam identifier included in the identification of a beam may be understood as a beam identifier of a single beam.

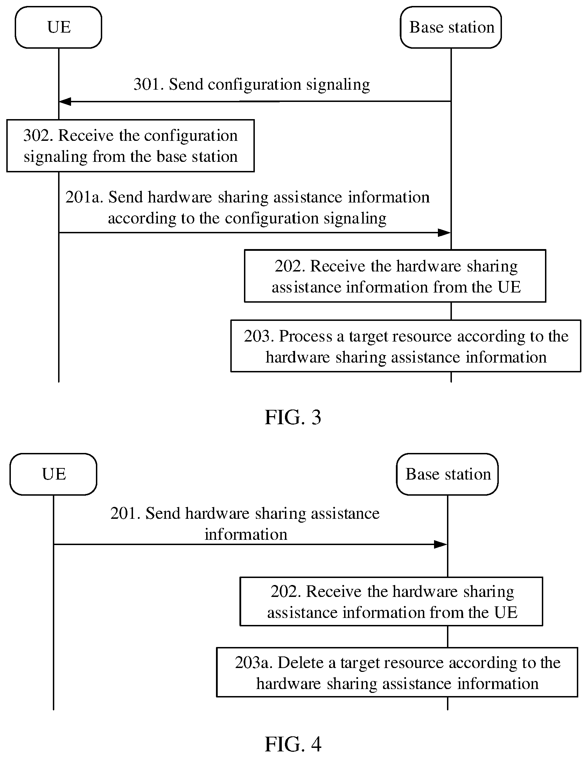

Optionally, in this embodiment of the present invention, with reference to FIG. 2, as shown in FIG. 3, before step 201, the resource indication method provided in this embodiment of the present invention may further include the following steps 301 and 302, and step 201 may be specifically implemented through the following step 201a.

Step 301: The base station sends configuration signaling to the UE.

In this embodiment of the present invention, the configuration signaling is used to instruct the UE to send the hardware sharing assistance information to the base station.

Optionally, in this embodiment of the present invention, the configuration signaling may include at least one of first configuration signaling and second configuration signaling. The first configuration signaling is used to instruct the UE not to report the hardware sharing assistance information within activated duration of a timer, and the second configuration signaling is used to instruct the UE to report the hardware sharing assistance information.

Step 302: The UE receives the configuration signaling from the base station.

Step 201a: The UE sends the hardware sharing assistance information to the base station according to the configuration signaling.

In this embodiment of the present invention, the UE may send the hardware sharing assistance information to the base station according to the instruction of the configuration signaling.

Optionally, in this embodiment of the present invention, when the configuration signaling includes at least the second configuration signaling, after the UE sends the hardware sharing assistance information to the base station, the UE may start the timer, and skip reporting the hardware sharing assistance information within the activated duration of the timer.

Step 202: The base station receives the hardware sharing assistance information from the UE.

Step 203: The base station processes the target resource according to the hardware sharing assistance information.

In this embodiment of the present invention, the base station may determine, based on indication of the hardware sharing assistance information (used to indicate the target resource), the resource with a hardware sharing phenomenon in the resources used by the UE, and process the resource (that is, the target resource).

For example, description is made by using an example in which the resource used by the UE is a frequency channel. It is assumed that the UE operates on a plurality of frequency channels (for example, a frequency channel 1, a frequency channel 2, and a frequency channel 3), sharing phenomena exist on these frequency channels, a sharing phenomenon on the frequency channel 1 is hardware sharing, and sharing phenomena on the frequency channel 2 and the frequency channel 3 are sharing caused by radio signal interference. The hardware sharing assistance information reported by the UE to the base station is used to indicate the frequency channel 1 on which the hardware sharing phenomenon exists. After receiving the hardware sharing assistance information, the base station processes the frequency channel 1 according to indication of the hardware sharing assistance information.

It can be understood that in the foregoing example, the hardware sharing assistance information reported by the UE to the base station only indicates the frequency channel 1 on which the hardware sharing phenomenon exists. After receiving the hardware sharing assistance information, the base station processes only the frequency channel 1, and does not process frequency channels on which a sharing phenomenon caused by radio signal interference (for example, the frequency channel 2 and the frequency channel 3) exists, that is, the frequency channel 2 and the frequency channel 3 are still frequency channels available to the UE.

According to the resource indication method provided in this embodiment of the present invention, the UE may send the hardware sharing assistance information to the base station (the hardware sharing assistance information is used to indicate the target resource, and the target resource is the resource with a hardware sharing phenomenon in the resources used by the UE), so that the base station can process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

Optionally, in a possible implementation of this embodiment of the present invention, with reference to FIG. 2, as shown in FIG. 4, step 203 may be specifically implemented through the following step 203a.

Step 203a: The base station deletes the target resource according to the hardware sharing assistance information.

In this embodiment of the present invention, the hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station deletes only the resource with a hardware sharing phenomenon in the resources used by the UE, and does not delete a resource, with a sharing phenomenon caused by radio signal interference, of the resources used by the UE, that is, the resource with a sharing phenomenon caused by radio signal interference is still available to the UE. In this way, the base station can accurately delete the resources used by the UE, thereby avoiding reduction of resources available to the UE.

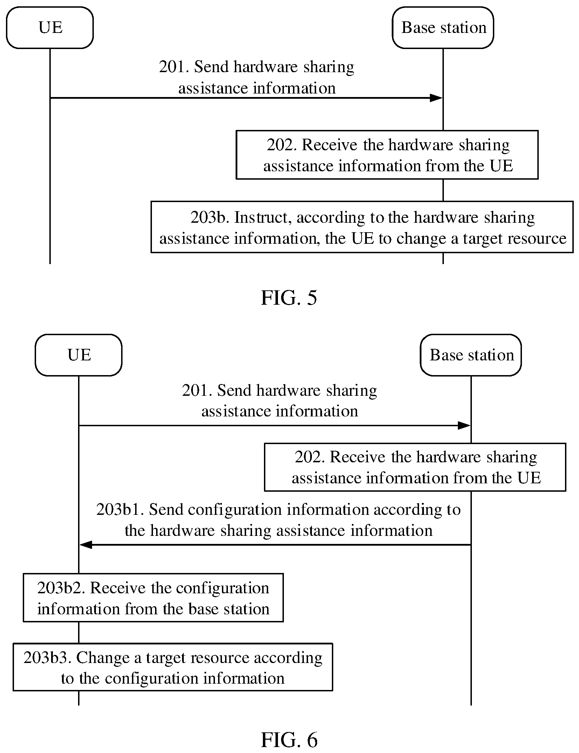

Optionally, in another possible implementation of this embodiment of the present invention, with reference to FIG. 2, as shown in FIG. 5, step 203 may be specifically implemented through the following step 203b.

Step 203b: The base station instructs, according to the hardware sharing assistance information, the UE to change the target resource.

In this embodiment of the present invention, the base station may instruct the UE to change from the target resource to another resource according to the hardware sharing assistance information.

For example, it is assumed that the target resource is the frequency channel 1. The base station instructs the UE to change from the frequency channel 1 to the frequency channel 2 according to the hardware sharing assistance information.

Optionally, in this embodiment of the present invention, with reference to FIG. 5, as shown in FIG. 6, step 203b may be specifically implemented through the following step 203b1 to step 203b3.

Step 203b1: The base station sends configuration information to the UE according to the hardware sharing assistance information.

In this embodiment of the present invention, the configuration information is used to instruct the UE to change the target resource.

Step 203b2. The UE receives the configuration information from the base station.

Step 203b3: The UE changes the target resource according to the configuration information.

In this embodiment of the present invention, the hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station instructs the UE to change the resource (that is, the target resource) with a hardware sharing phenomenon in the resources used by the UE, instead of instructing the UE to change a resource, with a sharing phenomenon caused by radio signal interference, of the resources used by the UE (that is, the resource with a sharing phenomenon caused by radio signal interference is still available to the UE). In this way, the base station can accurately instruct the UE to change the used resource, thereby avoiding reduction of resources available to the UE.

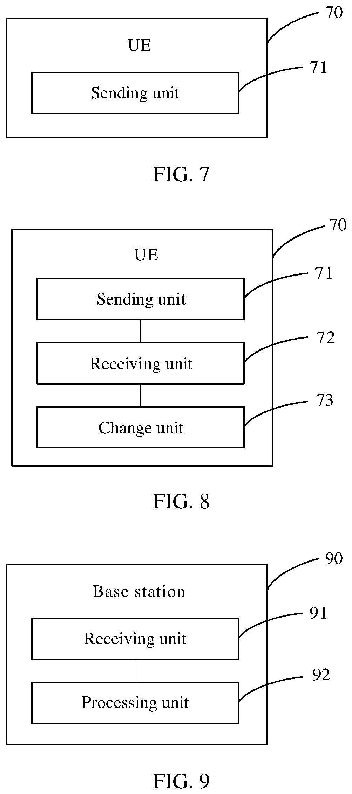

FIG. 7 is a possible schematic structural diagram of UE according to an embodiment of the present invention. As shown in FIG. 7, the UE 70 includes a sending unit 71. The sending unit 71 is configured to send hardware sharing assistance information to a base station, where the hardware sharing assistance information is used to indicate a target resource, the target resource is a resource with a hardware sharing phenomenon in resources used by the UE, and the hardware sharing assistance information is used by the base station to process the target resource.

The hardware sharing assistance information includes at least one of the following: a frequency channel identifier, a frequency band identifier, a frequency band combination identifier, a bandwidth identifier, a BWP identifier, a cell identifier, a cell group identifier, a radio access technology identifier, and identification of a beam. The target resource includes at least one of the following: a target frequency channel, a target frequency band, a target frequency band combination, a target bandwidth, a target BWP, a target cell, a target cell group, a target radio access technology, and a target beam.

In a possible implementation, the identification of a beam may include at least one of the following: a beam identifier, a beam pair identifier, an SSB identifier, a CSI-RS identifier, a QCL identifier, and an SRS identifier.

In a possible implementation, with reference to FIG. 7, as shown in FIG. 8, the UE 70 provided in this embodiment of the present invention may further include a receiving unit 72 and a change unit 73. The receiving unit 72 is configured to receive configuration information from the base station after the sending unit 71 sends the hardware sharing assistance information to the base station. The configuration information is used to instruct the UE to change the target resource. The change unit 73 is configured to change the target resource according to the configuration information received by the receiving unit 72.

The UE provided in this embodiment of the present invention can implement each process implemented by the UE in the foregoing method embodiment. To avoid repetition, details are not described herein again.

According to the present invention, the UE sends the hardware sharing assistance information to the base station (the hardware sharing assistance information is used to indicate the target resource, and the target resource is the resource with a hardware sharing phenomenon in the resources used by the UE), so that the base station can process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

FIG. 9 is a possible schematic structural diagram of a base station according to an embodiment of the present invention. As shown in FIG. 9, the base station 90 includes a receiving unit 91 and a processing unit 92.

The receiving unit 91 is configured to receive hardware sharing assistance information from UE, where the hardware sharing assistance information is used to indicate a target resource, and the target resource is a resource with a hardware sharing phenomenon in resources used by the UE. The processing unit 92 is configured to process the target resource according to the hardware sharing assistance information received by the receiving unit 91.

The hardware sharing assistance information includes at least one of the following: a frequency channel identifier, a frequency band identifier, a frequency band combination identifier, a bandwidth identifier, a BWP identifier, a cell identifier, a cell group identifier, a radio access technology identifier, and identification of a beam. The target resource includes at least one of the following: a target frequency channel, a target frequency band, a target frequency band combination, a target bandwidth, a target BWP, a target cell, a target cell group, a target radio access technology, and a target beam.

In a possible implementation, the identification of a beam may include at least one of the following: a beam identifier, a beam pair identifier, an SSB identifier, a CSI-RS identifier, a QCL identifier, and an SRS identifier.

In a possible implementation, the processing unit 92 is specifically configured to: according to the hardware sharing assistance information received by the receiving unit 91, delete the target resource or instruct the UE to change the target resource.

In a possible implementation, the processing unit 92 is specifically configured to send configuration information to the UE, where the configuration information is used to instruct the UE to change the target resource.

The base station provided in this embodiment of the present invention can implement each process implemented by the base station in the foregoing method embodiment. To avoid repetition, details are not described herein again.

According to the present invention, the base station receives the hardware sharing assistance information from the UE (the hardware sharing assistance information is used to indicate the target resource, and the target resource is the resource with a hardware sharing phenomenon in the resources used by the UE), and processes the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

FIG. 10 is a schematic diagram of hardware of UE according to an embodiment of the present invention. As shown in FIG. 10, the UE 100 includes but is not limited to a radio frequency unit 101, a network module 102, an audio output unit 103, an input unit 104, a sensor 105, a display unit 106, a user input unit 107, an interface unit 108, a memory 109, a processor 110, and a power supply 111.

It should be noted that a person skilled in the art can understand that the structure of the UE shown in FIG. 10 does not constitute a limitation on the UE. The UE may include more or fewer components than those shown in FIG. 10, or some components may be combined, or the components may be disposed in different manners. For example, in this embodiment of the present invention, the UE includes but is not limited to a mobile phone, a tablet computer, a notebook computer, a palmtop computer, an in-vehicle terminal, a wearable device, a pedometer, or the like.

The processor 110 may be configured to send hardware sharing assistance information to a base station, where the hardware sharing assistance information is used to indicate a target resource, the target resource is a resource with a hardware sharing phenomenon in resources used by the UE, and the hardware sharing assistance information is used by the base station to process the target resource.

According to the present invention, the UE sends the hardware sharing assistance information to the base station (the hardware sharing assistance information is used to indicate the target resource, and the target resource is the resource with a hardware sharing phenomenon in the resources used by the UE), so that the base station can process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

It should be understood that in this embodiment of the present invention, the radio frequency unit 101 may be configured to receive and send signals in an information reception or transmission or call process. Specifically, after receiving downlink data from a base station, the radio frequency unit 101 sends the downlink data to the processor 110 for processing, and in addition, sends uplink data to the base station. Generally, the radio frequency unit 101 includes but is not limited to an antenna, at least one amplifier, a transceiver, a coupler, a low noise amplifier, a duplexer, and the like. In addition, the radio frequency unit 101 may further communicate with a network and another device through a wireless communications system.

The UE provides wireless broadband Internet access for a user by using the network module 102, for example, helps the user send and receive e-mails, browse web pages, and access streaming media.

The audio output unit 103 may convert audio data that is received by the radio frequency unit 101 or the network module 102 or stored in the memory 109 into an audio signal and output the audio signal as a sound. In addition, the audio output unit 103 may further provide an audio output (for example, a call signal reception sound or a message reception sound) related to a specific function performed by the UE 100. The audio output unit 103 includes a speaker, a buzzer, a receiver, and the like.

The input unit 104 is configured to receive an audio or video signal. The input unit 104 may include a graphics processing unit (Graphics Processing Unit, GPU) 1041 and a microphone 1042, and the graphics processing unit 1041 processes image data of a still picture or a video obtained by an image capture apparatus (for example, a camera) in an image capture mode or a video capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 is capable of receiving sounds and processing such sounds into audio data. The processed audio data may be converted in a telephone call mode into a format that can be sent by the radio frequency unit 101 to a mobile communications base station, for outputting.

The UE 100 further includes at least one sensor 105, for example, an optical sensor, a motion sensor, and other sensors. Specifically, the optical sensor includes an ambient light sensor and a proximity sensor, where the ambient light sensor can adjust luminance of the display panel 1061 based on brightness of ambient light, and the proximity sensor can turn off the display panel 1061 and/or backlight when the UE 100 is moved to an ear. As a type of motion sensor, an accelerometer sensor can detect magnitudes of accelerations in all directions (usually three axes), can detect a magnitude and a direction of gravity when the mobile phone is in a static state, and can be applied to UE posture recognition (such as screen switching between portrait and landscape, related games, and magnetometer posture calibration), functions related to vibration recognition (such as pedometer and tapping), and the like. The sensor 105 may also include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information input by the user or information provided for the user. The display unit 106 may include a display panel 1061, and the display panel 1061 may be configured in the form of a liquid crystal display (Liquid Crystal Display, LCD), an organic light-emitting diode (Organic Light-Emitting Diode, OLED), or the like.

The user input unit 107 may be configured to receive input digit or character information and generate key signal input related to user setting and function control of the UE. Specifically, the user input unit 107 includes a touch panel 1071 and other input devices 1072. The touch panel 1071, also referred to as a touchscreen, may capture a touch operation performed by the user on or near the touch panel (for example, an operation performed by the user on the touch panel 1071 or near the touch panel 1071 by using any appropriate object or accessory such as a finger or a stylus). The touch panel 1071 may include two parts: a touch detection apparatus and a touch controller. The touch detection apparatus detects a touch direction of the user, detects a signal carried by a touch operation, and transmits the signal to the touch controller. The touch controller receives touch information from the touch detection apparatus, converts the touch information into point coordinates, sends the point coordinates to the processor 110, and receives and executes a command sent by the processor 110. In addition, the touch panel 1071 may be implemented in a plurality of forms, for example, a resistive, capacitive, infrared, or surface acoustic wave touch panel. The user input unit 107 may further include the other input devices 1072 in addition to the touch panel 1071. Specifically, the other input devices 1072 may include but are not limited to a physical keyboard, a function key (such as a volume control key or a power on/off key), a trackball, a mouse, a joystick, and the like. Details are not described herein.

Further, the touch panel 1071 may cover the display panel 1061. After detecting a touch operation on or near the touch panel 1071, the touch panel 1071 transmits information about the touch operation to the processor 110 for the processor 110 to determine a touch event type, and then the processor 110 provides a corresponding visual output on the display panel 1061 based on the touch event type. Although in FIG. 10, the touch panel 1071 and the display panel 1061 act as two independent parts to implement input and output functions of the UE, in some embodiments, the touch panel 1071 and the display panel 1061 may be integrated to implement the input and output functions of the UE. This is not specifically limited herein.

The interface unit 108 is an interface connecting an external apparatus to the UE 100. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 108 may be configured to receive input (for example, data information and power) from the external apparatus, and transmit the received input to one or more elements of the UE 100, or may be configured to transmit data between the UE 100 and the external apparatus.

The memory 109 may be configured to store a software program and various data. The memory 109 may mainly include a program storage area and a data storage area. The program storage area may store an operating system, an application program required for at least one function (such as a sound play function and an image play function), and the like. The data storage area may store data created based on use of the mobile phone (such as audio data and a phone book), and the like. In addition, the memory 109 may include a high-speed random access memory, or may include a nonvolatile memory, for example, at least one magnetic disk storage device, a flash memory, or other volatile solid-state storage devices.

The processor 110 is a control center of the UE, and is connected to all components of the UE by using various interfaces and lines. By running or executing a software program and/or module that is stored in the memory 109 and calling data stored in the memory 109, the processor 110 executes various functions of the UE and processes data, so as to perform overall monitoring on the UE. The processor 110 may include one or more processing units. Preferably, the processor 110 may integrate an application processor and a modem processor. The application processor mainly processes the operating system, a user interface, an application program, and the like. The modem processor mainly processes wireless communication. It may be understood that the modem processor may alternatively not be integrated into the processor 110.

The UE 100 may further include the power supply 111 (such as a battery) supplying power to each component. Preferably, the power supply 111 may be logically connected to the processor 110 by using a power management system, so that functions such as charge and discharge management and power consumption management are implemented by using the power management system.

In addition, the UE 100 includes some function modules that are not shown, details of which are not described herein.

Optionally, an embodiment of the present invention further provides UE, including a processor 110, a memory 109, and a computer program stored in the memory 109 and capable of running on the processor 110 that are shown in FIG. 10. When the computer program is executed by the processor 110, processes of the foregoing method embodiments can be implemented and a same technical effect can be achieved. To avoid repetition, details are not described herein again.

An embodiment of the present invention further provides a computer-readable storage medium, where the computer-readable storage medium stores a computer program. When the computer program is executed by the processor 110 shown in FIG. 10, the processes of the foregoing embodiments of the prompting method are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disk.

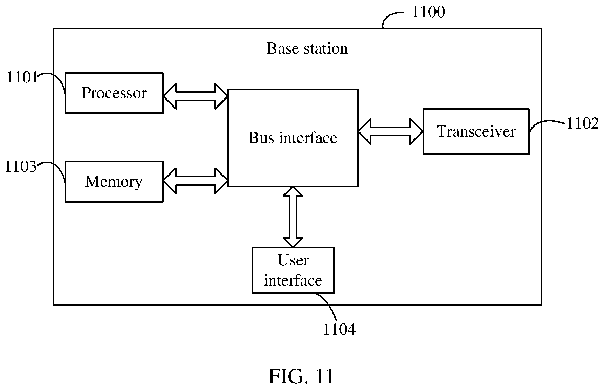

FIG. 11 is a schematic diagram of hardware of a base station according to an embodiment of the present invention. As shown in FIG. 11, a base station 1100 includes a processor 1101, a transceiver 1102, a memory 1103, a user interface 1104, and a bus interface.

The processor 1101 may be configured to receive hardware sharing assistance information from UE, where the hardware sharing assistance information is used to indicate a target resource, and the target resource is a resource with a hardware sharing phenomenon in resources used by the UE; and process the target resource according to the hardware sharing assistance information.

According to the base station provided in this embodiment of the present invention, the base station may receive the hardware sharing assistance information from the UE (the hardware sharing assistance information is used to indicate the target resource, and the target resource is the resource with a hardware sharing phenomenon in the resources used by the UE), and process the target resource according to indication of the hardware sharing assistance information. The hardware sharing assistance information sent by the UE to the base station is used to indicate the target resource, and the target resource is the resource with a hardware sharing phenomenon in the resources used by the UE. Therefore, the base station can accurately determine, based on the hardware sharing assistance information, the resource with a hardware sharing phenomenon in the resources used by the UE, so that the base station processes only the resource with a hardware sharing phenomenon in the resources used by the UE, and does not process a resource, with a sharing phenomenon caused by radio signal interference, of the resources used by the UE. In this way, the base station can accurately process the resources used by the UE, thereby avoiding reduction of resources available to the UE.

The processor 1101 may be responsible for bus architecture management and general processing. The processor 1101 may be configured to read and execute the program in the memory 1103 to implement a processing function and control the base station 1100. The memory 1103 may store data for use by the processor 1101 when performing an operation. The processor 1101 and the memory 1103 may be integrated together or independently disposed.

In an embodiment of the present invention, the base station 1100 may further include a computer program that is stored on the memory 1103 and capable of running on the processor 1101, where when the computer program is executed by the processor 1101, the steps of the methods provided in the embodiments of the present invention are implemented.

In FIG. 11, a bus architecture may include any quantity of interconnected buses and bridges, and specifically connect together various circuits of one or more processors represented by the processor 1101 and a memory represented by the memory 1103. The bus architecture may further connect together various other circuits such as a peripheral device, a voltage stabilizer, and a power management circuit. These are well known in the art, and therefore are not further described in the embodiments of the present invention any more. The bus interface provides interfaces. The transceiver 1102 may be a plurality of elements, including a transmitter and a receiver, and provides units configured to perform communication with various other apparatuses over a transmission medium. For different UE, the user interface 1104 may also be an interface that can be externally or internally connected to a required device. The connected device includes but is not limited to a keypad, a display, a speaker, a microphone, and a joystick.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, a person skilled in the art can clearly understand that the method in the foregoing embodiments may be implemented by software on a necessary universal hardware platform or by hardware only. In most cases, the former is a more preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings, but the present invention is not limited to the foregoing implementations. The foregoing embodiments are only illustrative rather than restrictive. Inspired by the present invention, a person of ordinary skill in the art can still derive many variations without departing from the protection scope of the claims. All these variations shall fall within the scope of protection of the present invention as defined by the appended claims.

## Claims

1. A resource indication method, performed by a user equipment, UE, the method comprising:
sending (201) hardware sharing assistance information to a base station, wherein the hardware sharing assistance information is used to indicate a target resource, and the target resource is a resource with a hardware sharing phenomenon in resources used by the UE;
the method being **characterized in that** the target resource comprises at least one of the following: a target bandwidth part, BWP, a target cell, a target cell group, and a target beam;
wherein the hardware sharing assistance information comprises at least one of the following: an identifier of the target BWP, an identifier of the target cell, an identifier of the target cell group, and identification of the target beam.

2. The method according to claim 1, wherein the hardware sharing assistance information further comprises at least one of the following: a frequency channel identifier, a frequency band identifier, a frequency band combination identifier, a bandwidth identifier and an identifier of the target radio access technology; and
the target resource further comprises at least one of the following: a target frequency channel, a target frequency band, a target frequency band combination, a target bandwidth and a target radio access technology.

3. The method according to claim 2, wherein the identification of a beam comprises at least one of the following:
a beam identifier, a beam pair identifier, a synchronization signal block, SSB, identifier, a channel state information reference signal, CSI-RS, identifier, a quasi co-location, QCL, identifier, and a sounding reference signal, SRS, identifier.

4. The method according to any one of claims 1 to 3, wherein after the sending (201) hardware sharing assistance information to a base station, the method further comprises:
receiving (203b2) configuration information from the base station, wherein the configuration information is used to instruct the UE to change the target resource; and
changing (203b3) the target resource according to the configuration information.

5. A resource indication method, performed by a base station, the method comprising:
receiving (202) hardware sharing assistance information from user equipment, UE, wherein the hardware sharing assistance information is used to indicate a target resource, and the target resource is a resource with a hardware sharing phenomenon in resources used by the UE; and
processing (203) the target resource according to the hardware sharing assistance information;
the method being **characterized in that** the target resource comprises at least one of the following: a target BWP, a target cell, a target cell group, and a target beam;
wherein the hardware sharing assistance information comprises at least one of the following: an identifier of the target BWP, an identifier of the target cell, an identifier of the target cell group, and identification of the target beam.

6. The method according to claim 5, wherein the hardware sharing assistance information further comprises at least one of the following: a frequency channel identifier, a frequency band identifier, a frequency band combination identifier, a bandwidth identifier and an identifier of the target radio access technology; and
the target resource further comprises at least one of the following: a target frequency channel, a target frequency band, a target frequency band combination, a target bandwidth and a target radio access technology.

7. The method according to claim 6, wherein the identification of a beam comprises at least one of the following:
a beam identifier, a beam pair identifier, a synchronization signal block SSB identifier, a channel state information reference signal, CSI-RS, identifier, a quasi co-location, QCL, identifier, and a sounding reference signal, SRS, identifier.

8. The method according to any one of claims 5 to 7, wherein the processing (203) the target resource according to the hardware sharing assistance information comprises:
according to the hardware sharing assistance information, deleting (203a) the target resource or instructing (203b) the UE to change the target resource.

9. The method according to claim 8, wherein the instructing (203b) the UE to change the target resource comprises:
sending (203b1) configuration information to the UE, wherein the configuration information is used to instruct the UE to change the target resource.

10. A user equipment, UE (70), comprising a sending unit (71), wherein
the sending unit (71) is configured to send hardware sharing assistance information to a base station, wherein the hardware sharing assistance information is used to indicate a target resource, and the target resource is a resource with a hardware sharing phenomenon in resources used by the UE (70);
**characterized in that**
the target resource comprises at least one of the following: a target BWP, a target cell, a target cell group, and a target beam;
wherein the hardware sharing assistance information comprises at least one of the following: an identifier of the target BWP, an identifier of the target cell, an identifier of the target cell group, and identification of the target beam.

11. The UE (70) according to claim 10, wherein the UE (70) further comprises a receiving unit (72) and a change unit (73), wherein
the receiving unit (72) is configured to: receive configuration information from the base station after the sending unit (71) sends the hardware sharing assistance information to the base station, wherein the configuration information is used to instruct the UE (70) to change the target resource; and
the change unit (73) is configured to change the target resource according to the configuration information received by the receiving unit (72).

12. A base station (90), comprising a receiving unit (91) and a processing unit (92), wherein
the receiving unit (91) is configured to receive hardware sharing assistance information from user equipment, UE, wherein the hardware sharing assistance information is used to indicate a target resource, and the target resource is a resource with a hardware sharing phenomenon in resources used by the UE; and
the processing unit (92) is configured to process the target resource according to the hardware sharing assistance information received by the receiving unit (91);
**characterized in that**
the target resource comprises at least one of the following: a target BWP, a target cell, a target cell group, and a target beam;
wherein the hardware sharing assistance information comprises at least one of the following: an identifier of the target BWP, an identifier of the target cell, an identifier of the target cell group, and identification of the target beam.

13. The base station (90) according to claim 12, wherein the processing unit (92) is specifically configured to: according to the hardware sharing assistance information received by the receiving unit (91), delete the target resource or instruct the UE to change the target resource.

14. A communications system, wherein the communications system comprises the user equipment, UE, according to any one of claims 10 to 11 and the base station according to any one of claims 12 to 13.

15. A computer-readable storage medium, wherein the computer-readable storage medium stores a computer program, and when the computer program is executed by a processor, and when the processor is a processor of a user equipment, it enables the user equipment to implement the steps of the resource indication method according to any one of claims 1 to 4, when the processor is a processor of a base station, it enables the base station to implement the steps of the resource indication method according to any one of claims 5 to 9.

## Patentansprüche

1. Ressourcenanzeigeverfahren, das von einem Benutzergerät, UE, durchgeführt wird, wobei das Verfahren Folgendes umfasst:
Senden (201) von Hardware-Sharing-Unterstützungsinformationen an eine Basisstation, wobei die Hardware-Sharing-Unterstützungsinformationen verwendet werden, um eine Zielressource anzuzeigen, und die Zielressource eine Ressource mit einem Hardware-Sharing-Phänomen in Ressourcen ist, die von dem UE verwendet werden;
wobei das Verfahren **dadurch gekennzeichnet ist, dass** die Zielressource mindestens eines der folgenden umfasst: einen Zielbandbreitenteil, BWP, eine Zielzelle, eine Zielzellengruppe und einen Zielstrahl;
wobei die Hardware-Sharing-Unterstützungsinformationen mindestens eines der Folgenden umfassen: einen Identifikator des Ziel-BWP, einen Identifikator der Zielzelle, einen Identifikator der Zielzellengruppe und eine Identifizierung des Zielstrahls.

2. Verfahren nach Anspruch 1, wobei die Hardware-Sharing-Unterstützungsinformationen ferner mindestens eines der Folgenden umfassen: einen Frequenzkanalidentifikator, einen Frequenzbandidentifikator, einen Frequenzbandkombinationsidentifikator, einen Bandbreitenidentifikator und einen Identifikator der Zielfunkzugriffstechnologie; und
die Zielressource ferner mindestens eines der Folgenden umfasst: einen Zielfrequenzkanal, ein Zielfrequenzband, eine Zielfrequenzbandkombination, eine Zielbandbreite und eine Zielfunkzugriffstechnologie.

3. Verfahren nach Anspruch 2, wobei die Identifizierung eines Strahls mindestens eines der Folgenden umfasst:
einen Strahlidentifikator, einen Strahlpaaridentifikator, einen Synchronisationssignalblock-, SSB-, Identifikator, einen Kanalzustandsinformationsreferenzsignal-, CSI-RS-, Identifikator, einen Quasi-Co-Locations-, QCL-, Identifikator und einen Klangreferenzsignal-, SRS-, Identifikator.

4. Verfahren nach einem der Ansprüche 1 bis 3, wobei das Verfahren nach dem Senden (201) von Hardware-Sharing-Unterstützungsinformationen an eine Basisstation ferner Folgendes umfasst:
Empfangen (203b2) von Konfigurationsinformationen von der Basisstation, wobei die Konfigurationsinformationen verwendet werden, um das UE anzuweisen, die Zielressource zu ändern; und Ändern (203b3) der Zielressource gemäß den Konfigurationsinformationen.

5. Ressourcenanzeigeverfahren, das von einer Basisstation durchgeführt wird, wobei das Verfahren Folgendes umfasst:
Empfangen (202) von Hardware-Sharing-Unterstützungsinformationen von einem Benutzergerät, UE, wobei die Hardware-Sharing-Unterstützungsinformationen verwendet werden, um eine Zielressource anzuzeigen, und die Zielressource eine Ressource mit einem Hardware-Sharing-Phänomen in Ressourcen ist, die von dem UE verwendet werden; und
Verarbeiten (203) der Zielressource gemäß den Hardware-Sharing-Unterstützungsinformationen;
wobei das Verfahren **dadurch gekennzeichnet ist, dass** die Zielressource mindestens eines der Folgenden umfasst: einen Ziel-BWP, eine Zielzelle, eine Zielzellengruppe und einen Zielstrahl;
wobei die Hardware-Sharing-Unterstützungsinformationen mindestens eines der Folgenden umfassen: einen Identifikator des Ziel-BWP, einen Identifikator der Zielzelle, einen Identifikator der Zielzellengruppe und eine Identifizierung des Zielstrahls.

6. Verfahren nach Anspruch 5, wobei die Hardware-Sharing-Unterstützungsinformationen ferner mindestens eines der Folgenden umfassen: einen Frequenzkanalidentifikator, einen Frequenzbandidentifikator, einen Frequenzbandkombinationsidentifikator, einen Bandbreitenidentifikator und einen Identifikator der Zielfunkzugriffstechnologie; und
die Zielressource ferner mindestens eines der Folgenden umfasst: einen Zielfrequenzkanal, ein Zielfrequenzband, eine Zielfrequenzbandkombination, eine Zielbandbreite und eine Zielfunkzugriffstechnologie.

7. Verfahren nach Anspruch 6, wobei die Identifizierung eines Strahls mindestens eines der Folgenden umfasst:
einen Strahlidentifikator, einen Strahlpaaridentifikator, einen Synchronisationssignalblock-, SSB-, Identifikator, einen Kanalzustandsinformationsreferenzsignal-, CSI-RS-, Identifikator, einen Quasi-Co-Locations-, QCL-, Identifikator und einen Klangreferenzsignal-, SRS-, Identifikator.

8. Verfahren nach einem der Ansprüche 5 bis 7, wobei das Verarbeiten (203) der Zielressource gemäß den Hardware-Sharing-Unterstützungsinformationen Folgendes umfasst:
gemäß den Hardware-Sharing-Unterstützungsinformationen Löschen (203a) der Zielressource oder Anweisen (203b) des UE, die Zielressource zu ändern.

9. Verfahren nach Anspruch 8, wobei das Anweisen (203b) des UE, die Zielressource zu ändern, Folgendes umfasst:
Senden (203b1) von Konfigurationsinformationen an das UE, wobei die Konfigurationsinformationen verwendet werden, um das UE anzuweisen, die Zielressource zu ändern.

10. Benutzergerät, UE (70), umfassend eine Sendeeinheit (71), wobei
die Sendeeinheit (71) zum Senden von Hardware-Sharing-Unterstützungsinformationen an eine Basisstation konfiguriert ist, wobei die Hardware-Sharing-Unterstützungsinformationen verwendet werden, um eine Zielressource anzuzeigen, und die Zielressource eine Ressource mit einem Hardware-Sharing-Phänomen in Ressourcen ist, die von dem UE (70) verwendet werden;
**dadurch gekennzeichnet ist, dass** die Zielressource mindestens eines der Folgenden umfasst: einen Ziel-BWP, eine Zielzelle, eine Zielzellengruppe und einen Zielstrahl;
wobei die Hardware-Sharing-Unterstützungsinformationen mindestens eines der Folgenden umfassen: einen Identifikator des Ziel-BWP, einen Identifikator der Zielzelle, einen Identifikator der Zielzellengruppe und eine Identifizierung des Zielstrahls.

11. UE (70) nach Anspruch 10, wobei das UE (70) ferner eine Empfangseinheit (72) und eine Änderungseinheit (73) umfasst, wobei
die Empfangseinheit (72) zu Folgendem konfiguriert ist: Empfangen von Konfigurationsinformationen von der Basisstation, nachdem die Sendeeinheit (71) die Hardware-Sharing-Unterstützungsinformationen an die Basisstation gesendet hat, wobei die Konfigurationsinformationen verwendet werden, um das UE (70) anzuweisen, die Zielressource zu ändern; und
die Änderungseinheit (73) zum Ändern der Zielressource gemäß den von der Empfangseinheit (72) empfangenen Konfigurationsinformationen konfiguriert ist.

12. Basisstation (90), umfassend eine Empfangseinheit (91) und eine Verarbeitungseinheit (92), wobei
die Empfangseinheit (91) zum Empfangen von Hardware-Sharing-Unterstützungsinformationen von einem Benutzergerät, UE, konfiguriert ist, wobei die Hardware-Sharing-Unterstützungsinformationen verwendet werden, um eine Zielressource anzuzeigen, und die Zielressource eine Ressource mit einem Hardware-Sharing-Phänomen in Ressourcen ist, die von dem UE verwendet werden; und
die Verarbeitungseinheit (92) zum Verarbeiten der Zielressource gemäß den von der Empfangseinheit (91) empfangenen Hardware-Sharing-Unterstützungsinformationen konfiguriert ist;
**dadurch gekennzeichnet ist, dass** die Zielressource mindestens eines der Folgenden umfasst: einen Ziel-BWP, eine Zielzelle, eine Zielzellengruppe und einen Zielstrahl;
wobei die Hardware-Sharing-Unterstützungsinformationen mindestens eines der Folgenden umfassen: einen Identifikator des Ziel-BWP, einen Identifikator der Zielzelle, einen Identifikator der Zielzellengruppe und eine Identifizierung des Zielstrahls.

13. Basisstation (90) nach Anspruch 12, wobei die Verarbeitungseinheit (92) speziell zu Folgendem konfiguriert ist: gemäß den von der Empfangseinheit (91) empfangenen Hardware-Sharing-Unterstützungsinformationen Löschen der Zielressource oder Anweisen des UE, die Zielressource zu ändern.

14. Kommunikationssystem, wobei das Kommunikationssystem das Benutzergerät, UE, nach einem der Ansprüche 10 bis 11 und die Basisstation nach einem der Ansprüche 12 bis 13 umfasst.

15. Computerlesbares Speichermedium, wobei das computerlesbare Speichermedium ein Computerprogramm speichert und, wenn das Computerprogramm durch einen Prozessor ausgeführt wird und wenn der Prozessor ein Prozessor eines Benutzergeräts ist, es dem Benutzergerät ermöglicht, die Schritte des Ressourcenanzeigeverfahrens nach einem der Ansprüche 1 bis 4 zu implementieren, wenn der Prozessor ein Prozessor einer Basisstation ist, es der Basisstation ermöglicht, die Schritte des Ressourcenanzeigeverfahrens nach einem der Ansprüche 5 bis 9 zu implementieren.

## Revendications

1. Procédé d'indication de ressource exécuté par un équipement utilisateur, UE, le procédé comprenant :
envoyer (201) des informations d'assistance au partage de matériel à une station de base, dans lequel les informations d'assistance au partage de matériel sont utilisées pour indiquer une ressource cible, et la ressource cible est une ressource avec un phénomène de partage de matériel dans des ressources utilisées par l'UE ;
le procédé étant **caractérisé en ce que** la ressource cible comprend au moins l'un des éléments suivants : une partie de largeur de bande cible, BWP, une cellule cible, un groupe de cellules cible et un faisceau cible ;
dans lequel les informations d'assistance au partage de matériel comprennent au moins l'un des éléments suivants : un identifiant de la BWP cible, un identifiant de la cellule cible, un identifiant du groupe de cellules cible et l'identification du faisceau cible.

2. Procédé selon la revendication 1, dans lequel les informations d'assistance au partage de matériel comprennent en outre au moins l'un des éléments suivants : un identifiant de canal de fréquence, un identifiant de bande de fréquence, un identifiant de combinaison de bandes de fréquence, un identifiant de largeur de bande et un identifiant de technologie d'accès radio cible ; et
la ressource cible comprend en outre au moins l'un des éléments suivants : un canal de fréquence cible, une bande de fréquence cible, une combinaison de bandes de fréquence cibles, une largeur de bande cible et une technologie d'accès radio cible.

3. Procédé selon la revendication 2, dans lequel l'identification d'un faisceau comprend au moins l'un des éléments suivants :
un identifiant de faisceau, un identifiant de paire de faisceaux, un identifiant de bloc de signal de synchronisation, SSB, un identifiant de signal de référence d'information d'état de canal, CSI-RS, un identifiant de quasi-colocalisation, QCL, et un identifiant de signal de référence de sondage, SRS.

4. Procédé selon l'une quelconque des revendications 1 à 3, dans lequel, après l'envoi (201) d'informations d'assistance de partage de matériel à une station de base, le procédé comprend de plus :
recevoir (203b2) des informations de configuration provenant de la station de base, les informations de configuration étant utilisées pour ordonner à l'UE de modifier la ressource cible ; et
modifier (203b3) la ressource cible selon les informations de configuration.

5. Procédé d'indication de ressource exécuté par une station de base, le procédé comprenant :
recevoir (202) des informations d'assistance au partage de matériel de l'équipement utilisateur, UE, dans lequel les informations d'assistance au partage de matériel sont utilisées pour indiquer une ressource cible, et la ressource cible est une ressource avec un phénomène de partage de matériel dans des ressources utilisées par l'UE ; et
traiter (203) la ressource cible selon les informations d'assistance au partage de matériel ;
le procédé étant **caractérisé en ce que** la ressource cible comprend au moins l'un des éléments suivants : une BWP cible, une cellule cible, un groupe de cellules cible et un faisceau cible ;
dans lequel les informations d'assistance au partage de matériel comprennent au moins l'un des éléments suivants : un identifiant de la BWP cible, un identifiant de la cellule cible, un identifiant du groupe de cellules cible et l'identification du faisceau cible.

6. Procédé selon la revendication 5, dans lequel les informations d'assistance au partage de matériel comprennent en outre au moins l'un des éléments suivants : un identifiant de canal de fréquence, un identifiant de bande de fréquence, un identifiant de combinaison de bandes de fréquence, un identifiant de largeur de bande et un identifiant de technologie d'accès radio cible ; et
la ressource cible comprend en outre au moins l'un des éléments suivants : un canal de fréquence cible, une bande de fréquence cible, une combinaison de bandes de fréquence cibles, une largeur de bande cible et une technologie d'accès radio cible.

7. Procédé selon la revendication 6, dans lequel l'identification d'un faisceau comprend au moins l'un des éléments suivants :
un identifiant de faisceau, un identifiant de paire de faisceaux, un identifiant de bloc de signal de synchronisation, SSB, un identifiant de signal de référence d'information d'état de canal, CSI-RS, un identifiant de quasi-colocalisation, QCL, et un identifiant de signal de référence de sondage, SRS.

8. Procédé selon l'une quelconque des revendications 5 à 7, dans lequel le traitement (203) de la ressource cible selon les informations d'assistance au partage de matériel comprend :
selon les informations d'assistance au partage de matériel, supprimer (203a) la ressource cible ou ordonner (203b) à l'UE de modifier la ressource cible.

9. Procédé selon la revendication 8, dans lequel l'ordre donné (203b) à l'UE de modifier la ressource cible comprend :
envoyer (203b1) des informations de configuration à l'UE, dans lequel les informations de configuration sont utilisées pour ordonner à l'UE de modifier la ressource cible.

10. Équipement utilisateur, UE (70), comprenant une unité d'envoi (71), dans lequel
l'unité d'envoi (71) est configurée pour envoyer des informations d'assistance au partage de matériel à une station de base, dans lequel les informations d'assistance au partage de matériel sont utilisées pour indiquer une ressource cible, et la ressource cible est une ressource avec un phénomène de partage de matériel dans des ressources utilisées par l'UE (70) ;
**caractérisé en ce que** la ressource cible comprend au moins l'un des éléments suivants : une BWP cible, une cellule cible, un groupe de cellules cible et un faisceau cible ;
dans lequel les informations d'assistance au partage de matériel comprennent au moins l'un des éléments suivants : un identifiant de la BWP cible, un identifiant de la cellule cible, un identifiant du groupe de cellules cible et l'identification du faisceau cible.

11. UE (70) selon la revendication 10, dans lequel l'UE (70) comprend en outre une unité de réception (72) et une unité de modification (73), dans lequel
l'unité de réception (72) est configurée pour : recevoir des informations de configuration provenant de la station de base après que l'unité d'envoi (71) a envoyé les informations d'assistance au partage de matériel à la station de base, dans lequel les informations de configuration sont utilisées pour ordonner à l'UE (70) de modifier la ressource cible ; et
l'unité de modification (73) est configurée pour modifier la ressource cible selon les informations de configuration reçues par l'unité de réception (72).

12. Station de base (90), comprenant une unité de réception (91) et une unité de traitement (92), dans laquelle
l'unité de réception (91) est configurée pour recevoir des informations d'assistance au partage de matériel de l'équipement utilisateur, UE, dans lequel les informations d'assistance au partage de matériel sont utilisées pour indiquer une ressource cible, et la ressource cible est une ressource avec un phénomène de partage du matériel dans des ressources utilisées par l'UE ; et
l'unité de traitement (92) est configurée pour traiter la ressource cible selon les informations d'assistance au partage de matériel reçues par l'unité de réception (91) ;
**caractérisé en ce que** la ressource cible comprend au moins l'un des éléments suivants : une BWP cible, une cellule cible, un groupe de cellules cible et un faisceau cible ;
dans lequel les informations d'assistance au partage de matériel comprennent au moins l'un des éléments suivants : un identifiant de la BWP cible, un identifiant de la cellule cible, un identifiant du groupe de cellules cible et l'identification du faisceau cible.

13. Station de base (90) selon la revendication 12, dans laquelle l'unité de traitement (92) est spécifiquement configurée pour : selon les informations d'assistance au partage de matériel reçues par l'unité de réception (91), supprimer la ressource cible ou ordonner à l'UE de modifier la ressource cible.

14. Système de communication, dans lequel le système de communication comprend l'équipement utilisateur, UE, selon l'une quelconque des revendications 10 à 11 et la station de base selon l'une quelconque des revendications 12 à 13.

15. Support de stockage lisible par ordinateur, dans lequel le support de stockage lisible par ordinateur stocke un programme informatique, et lorsque le programme informatique est exécuté par un processeur, et lorsque le processeur est un processeur d'un équipement utilisateur, il permet à l'équipement utilisateur de mettre en œuvre les étapes du procédé d'indication de ressource selon l'une quelconque des revendications 1 à 4, lorsque le processeur est un processeur d'une station de base, il permet à la station de base de mettre en œuvre les étapes du procédé d'indication de ressource selon l'une quelconque des revendications 5 à 9.
